(19) Europäisches Patentamt
European Patent Office
Office européen des brevets

(11) Numéro de publication: **0 079 565 A1**

# (12) DEMANDE DE BREVET EUROPEEN

(21) Numéro de dépôt: 82110314.0

(22) Date de dépôt: 09.11.82

(51) Int. Cl.$^3$: B 01 J 37/34
B 01 J 23/22, B 01 J 23/24
B 01 J 23/38, B 01 J 23/70

(30) Priorité: 13.11.81 FR 8121313

(43) Date de publication de la demande: 25.05.83 Bulletin 83/21

(84) Etats contractants désignés: BE CH DE FR GB IT LI NL SE

(71) Demandeur: COMPAGNIE GENERALE D'ELECTRICITE
Société anonyme dite:
54, rue La Boétie
F-75382 Paris Cedex 08(FR)

(72) Inventeur: Messina, Richard
19, rue des Jardins, Le Menhir
F-91800 Boussy Saint Antoine(FR)

(72) Inventeur: Pereira-Ramos, Jean-Pierre
9, Place de la Croix des Mèches, Tour 2
F-94000 Creteil(FR)

(72) Inventeur: Barboux, Dominique
15, Place de la République
F-77140 Nemours(FR)

(72) Inventeur: Petit, François
27, avenue de Flandres
F-59220 Wasquehal(FR)

(72) Inventeur: Perichon, Jacques
9, avenue Saint Jacques
F-91600 Savigny Sur Orge(FR)

(72) Inventeur: Fauvarque, Jean-François
6, rue Joseph Barra
F-75006 Paris(FR)

(74) Mandataire: Weinmiller, Jürgen et al,
Zeppelinstrasse 63
D-8000 München 80(DE)

## (54) Préparation de systèmes catalyseurs comprenant au moins un métal et un support solide en silice ou zéolithe.

(57) Le métal étant choisi dans le groupe formé par les métaux des groupes VIII, IB, IIB de la classification périodique des éléments, ainsi que le chrome, le vanadium, le molybdène et le tungstène, on introduit ledit métal sous une forme oxydée dans le support, généralement par échange d'ions.

Selon l'invention, on effectue une réduction électrochimique de ladite forme oxydée.

Les systèmes obtenus peuvent être utilisés pour la catalyse de nombreuses réactions, notamment en chimie organique.

./...



Croydon Printing Company Ltd

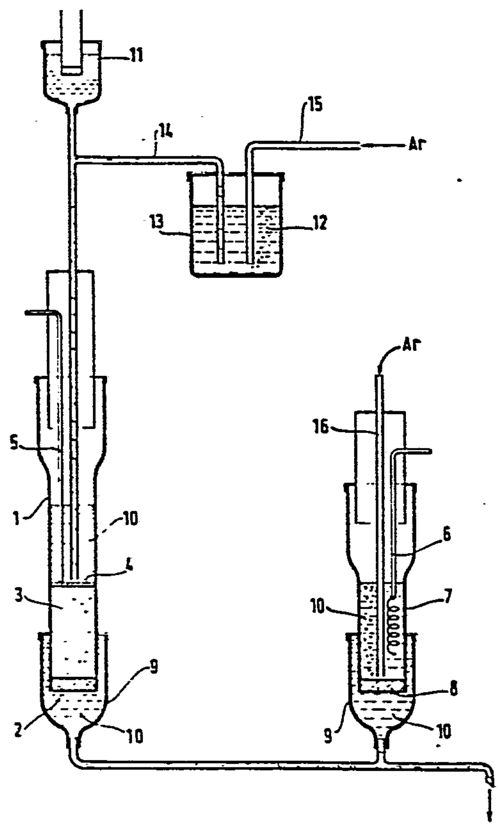
11
14
15
Ar
13
12
Ar
16
5
1
10
4
3
6
7
10
9
8
2
10
9
10

Préparation de systèmes catalyseurs comprenant au moins un métal et un support solide en silice ou zéolite.

L'invention concerne les systèmes catalyseurs constitués par des métaux, notamment ceux des groupes VIII, IB, IIB de la classification périodique des éléments, ainsi que le chrome, le vanadium, le molybdène, incorporés à des supports solides choisis dans le groupe formé par la silice et les zéolithes. Rappelons que les zéolithes sont des aluminosilicates hydratés, utilisés couramment comme échangeurs de cations.

De tels systèmes sont bien connus pour présenter des propriétés catalytiques vis-à-vis de nombreuses réactions organiques ou inorganiques.

A titre purement illustratif et nullement limitatif, on peut citer les réactions suivantes :

- hydrogénation, par exemple du benzène, sur Pt, Pd, Ni, Re, Ir.
- déshydrogénation, par exemple du cyclohexane, sur Ni, Pd, Pt.
- oxydation d'hydrocarbures, par exemple de l'éthylène, sur Cu, Ag, Au.
- hydroalkylation, par exemple du toluène, sur Re, Ni.
- hydrocracking, par exemple de l'hexane, sur Rh, Ir, Pt, Pd.
- isomérisation, par exemple du pentane, sur Pd, Pt, Ni.
- hydroisomérisation des hydrocarbures aromatiques et des oléfines, par exemple du benzène ou du pentène, sur Pt, Pd, Ir, Re.
- hydrodimérisation, par exemple du benzène, sur Ni, Pd.
- hydrocondensation des oxydes de carbone CO et $CO_2$, par exemple synthèse FISHER-TROPSCH, méthanation, synthèse d'alcools, d'alcènes, etc..., sur Ni, Fe, Cu, Ru, Os etc...
- oxydation de CO en $CO_2$ sur Cu
- etc ....

Ces systèmes catalyseurs peuvent être préparés selon de nombreux procédés, tels que : imprégnation, codéposition, adsorption à partir de phases gazeuses.

On procède généralement dans un premier temps par échange d'ions dans le but d'introduire dans la silice ou les zéolithes les cations des métaux appropriés, puis on effectue une réduction chimique pour obtenir les dépôts métalliques.

Cette réduction peut être réalisée par exemple :

- par l'hydrogène
- par le monoxyde de carbone
- par le sodium en phase vapeur
- par l'hydrazine $NH_2 - NH_2$ ou l'hydroxylamine $NH_2OH$

Le procédé par réduction à l'hydrogène est le plus courant.

Par exemple, en traitant une zéolithe comportant des ions $Ni^{2+}$ introduits par échange cationique et symbolisée par la formule $(ZO^-)_2\ Ni^{2+}$ par de l'hydrogène à température supérieure à 200°C on obtient un système catalyseur contenant du nickel métallique selon la réaction :

$$(ZO^-)_2\ Ni^{2+} + H_2 \longrightarrow Ni(o) + 2\ ZO^-H^+$$

Les températures de réduction dépendent de la nature du support, en particulier du rapport Si/Al dans les zéolithes, ainsi que du cation métallique et de sa teneur. Par exemple, une zéolithe échangée à 60% avec $Ni^{2+}$ est réduite à 66% sous $H_2$ pendant 2 h à 400°C. Par contre, le rendement de réduction est de 80% lorsque la zéolithe n'est échangée qu'à 40%.

Toutefois on a pu constater que ce processus de réduction par voie chimique pouvait entraîner certains inconvénients.

Ainsi, il est bien connu que l'activité et la sélectivité des systèmes catalyseurs métaux-supports solides dépendent de la taille et de l'homogénéité des particules métalliques déposées. Or, les meilleures répartitions étant obtenues en l'absence d'eau, seuls les traitements réducteurs à $H_2$, CO ou Na en phase vapeur sont utilisés et ce à température supérieure à l'ambiante, ce qui a pour contre-partie d'accroître la taille des particules dispersées, voir de détruire la structure cristalline du support initial.

Par exemple, dans certains types de zéolithes échangées au nickel, si le traitement de réduction à température élevée provoque bien la formation de nickel métallique bien dispersé, il a toutefois pour inconvénient de rendre amorphe la structure zéolithique.

On a constaté également que le traitement par l'hydrogène provoque la formation de deux types de dépôts métalliques : des agglomérats à l'intérieur du support, des cristallites à l'extérieur, ce qui nuit à la réversibilité de l'échange électronique :

$$\text{Support} - M^{n+} + ne^- \rightleftharpoons \text{Support} - M(o)$$

M étant le métal présent dans le système catalyseur.

On doit aussi noter que les différents procédés de réduction chimique utilisés, à l'exception de ceux utilisant le sodium en phase vapeur, ne permettent que la synthèse de matériaux acides ($ZO^-H^+$-métal) sans possibilité de remplacer facilement $H^+$ par un autre cation tel que $Na^+$, $Li^+$, $K^+$ par exemple.

Dans le cas du sodium, on obtient :

$$(ZO^-)_2\,Ni^{2+} + 2Na \longrightarrow Ni(o) + 2\,(ZO^-\,Na^+)$$

De plus, aucun des divers procédés de réduction chimique ne permet de contrôler le taux de réduction et même, dans le cas des métaux polyvalents, de s'arrêter à un degré d'oxydation intermédiaire (par exemple $Cu^+$).

Egalement, certains cations peu oxydants, par exemple $Fe^{2+}$, ne sont que très difficilement réduits du fait que $H_2$ ou CO ne sont pas des réducteurs suffisamment puissants, même à température et pression élevées.

Enfin, il est pratiquement impossible d'échanger simultanément plusieurs types de cations en proportion définie et de les réduire indépendemment les uns des autres.

La présente invention a pour but de remédier aux inconvénients précités.

Elle a pour objet un procédé de préparation d'un système catalyseur comprenant au moins un métal et un support solide en silice ou zéolithe, ledit métal étant choisi dans le groupe formé par les métaux des groupes VIII, IB, IIB de la classification périodique des éléments, ainsi que le chrome, le vanadium, le molybdène et le tungstène, le métal

étant introduit dans le support sous forme oxydée, généralement par échange d'ions, caractérisé par le fait que le support comportant la forme oxydée du métal est soumis à un traitement électrochimique pour réduire ladite forme oxydée.

L'invention sera mieux comprise en se reportant ci-après à la description qui va suivre, à titre illustratif et nullement limitatif, du procédé de réalisation d'ùn système catalyseur conforme à l'invention comportant un support zéolithique et de l'argent dispersé à l'intérieur dudit support, étant entendu qu'à la place du support zéolithique on peut substituer un support à base de silice.

Dans un premier temps, on réalise, de manière connue en soi, par échange d'ions, un composé zéolithique comprenant de l'argent sous forme cationique.

On utilise par exemple comme support une zéolithe type mordénite.

A titre illustratif, on peut utiliser le produit vendu sous la marque ALITE 150 par la Société de la Grande Paroisse et représentée par la formule $ZO^- Na^+$.

Une solution dans l'eau de $AgNO_3$ ou $AgClO_4$ à $10^{-3}$ mole.$l^{-1}$ est percolée à une vitesse de 3 ml à la minute à travers une colonne de 1 $cm^2$ de section contenant 10 g de zéolithe. Après percolation 1 litre d'eau permet le lavage complet de la zéolithe. Le matériau représenté par la formule $ZO^- Ag^+$ est isolé, puis conservé sous vide à 90°C.

Pour préparer le système conforme à l'invention, on peut procéder ainsi :

- $10^{-2}$g de $ZO^-Ag^+$ sont comprimés sur une grille d'acier inoxydable de 1 $cm^2$ de surface. Ce système constitue ce qui sera appelé l'électrode de travail. Celle-ci est disposée parallèlement à une contre-électrode de 1 $cm^2$ de surface, en lithium si la réduction est menée en milieu non aqueux (carbonate de propylène, tétrahydrofuranne, diméthoxyéthane, etc...), en platine et dans un compartiment séparé si la réduction est menée en solution aqueuse ou alcoolique, par exemple, dans l'éthanol. Une électrode de référence (calomel en milieu aqueux ou éthanol, $Ag/AgClO_4$ 0,1 mole.$l^{-1}$ en milieu non aqueux), destinée à mesurer le potentiel pris par l'électrode de travail, affleure celle-ci. Ces électrodes se trouvent dans une cellule contenant environ 10 $cm^3$ de solvant rendu conducteur par un électrolyte du type $MClO_4$ formule dans laquelle le cation correspondant à M peut être : $Li^+$, $Na^+$, $K^+$, $NBu_4{}^+$, $Cu^{2+}$, $Ni^{2+}$, $Fe^{2+}$, $Mg^{2+}$, $Ca^{2+}$, $H^+$, $NH_4^+$, $Cs^+$, etc ...), étant entendu que le cation de l'électrolyte présente dans le milieu considéré un potentiel rédox inférieur à celui du métal, sous forme oxydée, présent dans le support.

La cellule et le solvant sont dégazés et maintenus sous atmosphère d'argon. La concentration en électrolyte peut varier entre $10^{-2}$ et 1 mole.$l^{-1}$.

On impose une densité de courant constante, par exemple 1 mA par $cm^2$, à température ambiante entre l'électrode de travail et la contre-électrode. La réduction de $ZO^-Ag^+$ en $ZO^-M^+$- Ag(o) se traduit par un palier de potentiel et une brusque variation du potentiel lorsque tous les ions $Ag^+$ réductibles ont été transformés en Ag(o). La réaction qui se produit dans le cas où $M^+$ est un cation monovalent s'écrit :

$$ZO^-Ag^+ + M^+ + e^- \longrightarrow ZO^-M^+\text{- Ag(o)}$$

Ainsi le cation $M^+$ de l'électrolyte est venu s'échanger avec le cation $Ag^+$ qui se réduit électrochimiquement.

Cette technique permet la préparation de catalyseurs renfermant à la fois Ag(o) et différents autres métaux comme par exemple Cu(o). Pour cela on forme d'abord selon le processus électrochimique décrit ci-dessus le produit $(ZO^-)_2Cu^{++}$- Ag(o) selon la réaction :

$$2ZO^-Ag^+ + Cu(ClO_4)_2 + 2\ e^- \longrightarrow (ZO^-)_2Cu^{2+}\text{- 2Ag(o)} + 2ClO_4^-$$

Le composé zéolithique est réduit ensuite électrochimiquement au potentiel de réduction de $Cu^{2+}$, toujours selon le même processus selon la réaction :

$$(ZO^-)_2Cu^{2+}\text{- }2Ag_o + 2\ e + 2\ M^+ \longrightarrow 2\ ZO^-M^+\text{- 2Ag(o)Cu(o)}$$

$M^+$ présentant un potentiel redox inférieur à celui de $Cu^{2+}$ et pouvant être par exemple $Li^+$ ou $Na^+$.

On peut également utiliser le processus suivant :

L'électrode de travail est constituée d'une colonne de 1 $cm^2$ de section contenant 0,1 g de support zéolithique. Le contact électrique avec cette électrode de travail est assuré au moyen d'un feutre de graphite de 1 $cm^2$ déposé sur le solide au niveau supérieur de la colonne. La contre-électrode et l'électrode de référence sont identiques à celles décrites ci-dessus. Cette technique permet simultanément l'échange et la réduction des cations $M^+$, qui interviennent conformément au processus réactionnel décrit ci-dessus.

Sur la figure unique ci-jointe on a représenté schématiquement les moyens permettant la mise en oeuvre du mode de réalisation décrit ci-dessus.

A la partie inférieure d'un compartiment 1 obturé par une plaque de verre fritté 2 on a disposé une colonne de zéolithe 3 supportant un feutre de graphite 4 relié à un collecteur électrique 5. La référence 6 désigne une contre électrode, par exemple en platine, disposée dans un compartiment 7 dont la partie inférieure est obturée par une plaque de verre fritté 8. Les parties inférieures des compartiments 1 et 7 sont immergées dans une cellulé 9 remplie par l'électrolyte 10, lequel est également présent au-dessus du feutre de graphite 4 et dans le compartiment 7.

La référence 11 désigne l'électrode de référence, qui affleure le feutre de graphite 4.

La solution a percoler 12 est disposée dans une enceinte 13 qui communique par des moyens appropriés 14 avec l'électrode de référence 11 de telle manière qu'en insufflant dans la solution à percoler 12, au moyen du tube 15 de l'argon, on maintienne d'une part dans l'enceinte 13 une atmosphère d'argon et provoque d'autre part la percolation. Dans le compartiment 7, au moyen d'un tube 16 on introduit de l'argon de manière à obtenir une atmosphère d'argon au-dessus de l'électrolyte 10.

La percolation et le passage du courant assurant la réduction électrochimique sont effectués simultanément. La réduction électrochimique est initiée au niveau de la surface supérieure de la colonne de zéolithe 3 en contact avec le feutre de graphite 4 et se poursuit ensuite dans la masse de la zéolithe. L'avancement de la réduction électrochimique peut être suivi par la modification de la coloration de la zéolithe (blanc virant au gris noir).

Les modes de réalisation décrits ci-dessus peuvent également être appliqués à la préparation de systèmes catalyseurs à partir du support contenant un sel précipité ou un complexe du cation métallique.

Par exemple après avoir préparé comme décrit ci-dessus $ZO^-Ag^+$, on percole une solution aqueuse de $M_1Cl$ (formule dans laquelle le cation correspondant à $M_1$ peut être $Li^+$, $Na^+$, $NBu_4^+$, etc ...) sur $ZO^-Ag^+$. La réaction, d'échange d'ions et de précipitation, suivante se produit :

$ZO^-Ag^+ + M_1Cl \longrightarrow ZO^-M_1^+, AgCl$ (AgCl étant précipité à l'intérieur du support zéolithique)

Le matériau solide $ZO^-M_1^+$, AgCl est enfin réduit électrochimiquement selon l'un ou l'autre des processus précités.

$$ZO^-M_1^+, AgCl + e^- \longrightarrow ZO^-M_1^+ - Ag(o) + Cl^-$$

On peut également citer dans le cas d'une complexation par l'ammoniac :

$$ZO^-Ag^+ + 2NH_3 \longrightarrow ZO^- Ag(NH_3)_2^+$$

puis

$$ZO^-Ag(NH_3)_2^+ + M^+ + e^- \longrightarrow ZO^- M^+ - Ag(o) + 2NH_3$$

Le processus de réduction électrochimique conforme à l'invention appliquée à la forme oxydée du métal présent dans le support en silice ou en zéolithe permet :

- d'opérer à des température inférieures à 80°C, c'est-à-dire nettement plus faibles que celles mises en oeuvre dans les procédés chimiques de réduction. Ceci doit permettre de diminuer les tailles des particules métalliques précipitées dans le support en silice ou en zéolithe et donc d'accroître l'activité du catalyseur.
- de préparer très rapidement des catalyseurs contenant à l'intérieur du support un métal, et des cations divers $H^+$, $Li^+$, $Na^+$, $K^+$, $Mg^{2+}$, $Ca^{2+}$,

$Cu^{2+}$, $Ni^{2+}$, $Fe^{2+}$, etc ... dans des proportions désirées.

- de pouvoir réduire partiellement la forme oxydée du métal et de s'arrêter à des valences intermédiaires. Par exemple :

$$\left(ZO^-\right)_2Cu^{2+} + e + Li^+ \longrightarrow \left(ZO^-\right)_2Cu^+Li^+$$

- de pouvoir préparer les catalyseurs dans différents milieux solvants ($H_2O$, alcools, éthers, carbonate de propylène, diméthylsulfoxyde, chlorure de méthylène, hexaméthyl phosphorotriamide, etc...) ce qui peut conduire, en particulier à des catalyseurs homogènes supportés, si le solvant contient un ligand L (phosphine tertiaire) capable de stabiliser le métal sous forme d'un complexe à bas degré d'oxydation : Par exemple :

$$(ZO^-)_2Ni^{2+} + 2e^- + nL + 2Li^+ \longrightarrow (ZO^-)_2Li_2^+,\ Ni(o)L_n$$

- de pouvoir disposer de catalyseurs contenant un même métal oxydable électrochimiquement en solution à des niveaux énergétiques différents dépendant de la nature du complexant du cation métallique présent dans la solution. Par exemple :

$ZO^-Ag^+ + Li^+ + e \rightleftharpoons ZO^-Li^+\text{- }Ag(o)$ Eo = 0,7 V/ENH (ENH : électrode normale à hydrogène)

$ZO^-Li^+, AgCl + e \rightleftharpoons ZO^-Li^+\text{- }Ag(o) + Cl^-$ Eo = 0,3 V/ENH

Ceci montre que dans le cas du support contenant un sel précipité la réduction électrochimique intervient à un potentiel plus bas que lorsque l'argent est sous forme cationique non complexée.

- de pouvoir disposer facilement et directement de matériaux renfermant des quantités plus importantes de métal que ne le permet le simple échange d'ions. Par exemple :

Par réduction électrochimique on à la réaction :

$$ZO^-Ag^+ + e + Li^+ \rightleftharpoons ZO^-Li^+\text{- }Ag(o)$$

puis par échange ionique, on peut obtenir :

$$ZO^-Li^+ - Ag_o + Ag^+ \longrightarrow ZO^-Ag^+ - Ag(o) + Li^+$$

enfin par réduction électrochimique on obtient :

$$ZO^-Ag^+ - Ag(o) + e + Li^+ \longrightarrow ZO^-Li^+ - 2\ Ag(o)$$

ce qui permet donc d'obtenir la réaction globale suivante :

$$ZO^-Ag^+ + ne + nAg^+ + Li^+ \longrightarrow ZO^-Li^+ - (n+1)\ Ag(o)$$

On peut de cette manière rendre facilement conducteur électronique les supports en silice ou en zéolithes.

- de préparer des systèmes métal-cation métallique électrochimiquement réversible. Par exemple :

$$(ZO^-)_2Cu^{2+} + e + Li^+ \rightleftharpoons ZO^-{}_2Cu^+Li^+$$

$$(ZO^-)_2Cu^+Li^+ + e + Li^+ \rightleftharpoons ZO^-{}_2Li_2^+ - Cu(o)$$

On a pu constater que les systèmes catalyseurs préparés conformément à l'invention présentent une activité et une sélectivité améliorées vis-à-vis des nombreuses réactions énumérées dans l'introduction.

REVENDICATIONS

1/ Procédé de préparation d'un système catalyseur comprenant au moins un métal et un support solide en silice ou zéolithe, ledit métal étant choisi dans le groupe formé par les métaux des groupes VIII, IB, IIB de la classification périodique des éléments ainsi que le chrome, le vanadium, le molybdène et le tungstène, le métal étant introduit dans le support sous forme oxydée, généralement par échange d'ions, caractérisé par le fait que le support comportant la forme oxydée du métal est soumis à un traitement électrochimique pour réduire ladite forme oxydée.

2/ Procédé selon la revendication 1, caractérisé par le fait que l'introduction du métal sous forme oxydée dans le support et la réduction électrochimique sont réalisées simultanément.

3/ Procédé selon l'une des revendications 1 et 2, caractérisé par le fait que la réduction électrochimique est réalisée en utilisant un électrolyte de type $MClO_4$, formule dans laquelle le cation correspondant à M présente dans le milieu considéré un potentiel redox inférieur à celui du métal sous forme oxydée introduit dans le support.

4/ Procédé selon la revendication 3, caractérisé par le fait que le cation correspondant à M est choisi dans le groupe formé par $Li^+$, $Na^+$, $K^+$, $NBu_4^+$, $Cu^{2+}$, $Ni^{2+}$, $Fe^{2+}$, $Mg^{2+}$, $Ca^{2+}$, $H^+$, $NH_4^+$, $Cs^+$.

5/ Procédé selon l'une des revendications précédentes, caractérisé par le fait que le système catalyseur comprend plusieurs métaux.

6/ Procédé selon l'une des revendications 1 à 5, caractérisé par le fait que la réduction électrochimique conduit à la forme métallique du métal.

7/ Procédé selon l'une des revendications 1 et 5, caractérisé par le fait que la réduction électrochimique conduit à un état cationique du métal.

8/ Procédé selon l'une des revendications précédentes, caractérisé par le fait que préalablement à la réduction électrochimique le métal est présent dans le support sous forme d'un sel précipité.

9/ Procédé selon l'une des revendications 1 à 7, caractérisé par le fait que préalablement à la réduction électrochimique le métal est présent dans le support sous forme d'un complexe.

10/ Procédé selon l'une des revendications précédentes, caractérisé par le fait que la réduction électrochimique est réalisée à une température inférieure à 80°C.

11/ Procédé selon l'une des revendications précédentes, caractérisé par le fait que la réduction étant effectuée en milieu non aqueux, on dispose parallèlement à l'électrode de travail, formée par le support comprenant le métal sous forme oxydée et muni d'un collecteur métallique, une contre électrode, par exemple en lithium.

12/ Procédé selon la revendication 1 à 10, caractérisé par le fait que la réduction étant effectuée en milieu aqueux ou alcoolique, une contre électrode, par exemple en platine est disposée dans un compartiment distinct de celui comportant l'électrode de travail formée par le support comprenant le métal sous forme oxydée et muni d'un collecteur métallique.

13/ Système catalyseur obtenu selon l'une des revendications 1 à 12.

14/ Application du système selon la revendication 13, pour la catalyse de réaction, en particulier en chimie organique.

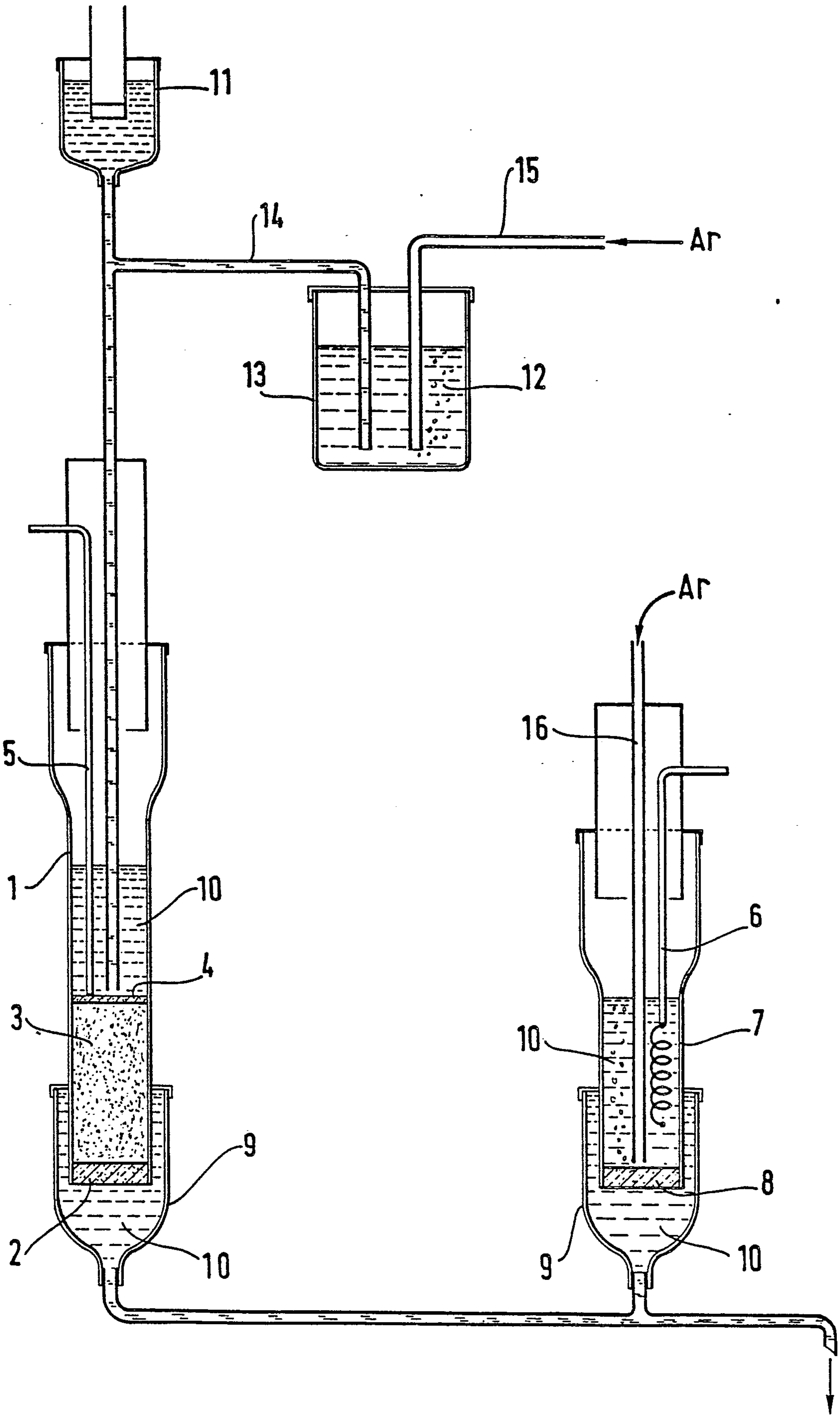
11
15
14
Ar
13
12
Ar
16
5
6
1
10
4
3
7
10
9
8
2
10
9
10

Office européen des brevets

**RAPPORT DE RECHERCHE EUROPEENNE**

0079565
Numéro de la demande

EP 82 11 0314

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 194 481 (W.R.GRACE & CO.)<br>*Page 2, lignes 1-20; page 3, ligne 28 - page 5, ligne 7; figures 1,2; revendications 1,6-8* | 1,2,5, 6,9,10 ,12-14 | B 01 J 37/34<br>B 01 J 23/22<br>B 01 J 23/24<br>B 01 J 23/38<br>B 01 J 23/70 |
| A | FR-A-2 147 323 (MITSUI MINING & MELTING CO)<br>*Page 2, lignes 13-22; page 2, ligne 34 - page 3, ligne 5; page 3, ligne 31 - page 4, ligne 9, page 7, lignes 7-12; tableau III,no.6; revendications 1,3-7,15* | 1,2,5, 6,10, 12-14 | |
| A | US-A-2 482 308 (CHRISTIAN WERNLUND)<br>*Colonne 3, ligne 44 - colonne 4, ligne 4; revendication 1* | 7 | **DOMAINES TECHNIQUES RECHERCHES (Int. Cl. 3)**<br>B 01 J 37/00 |
| A | US-A-4 115 322 (IKRAM MORCOS) | | |
| A | FR-A-2 104 026 (BAYER) | | |

Le présent rapport de recherche a été établi pour toutes les revendications

| Lieu de la recherche | Date d'achèvement de la recherche | Examinateur |
|---|---|---|
| LA HAYE | 31-01-1983 | HOFER H.R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82